(19) Europäisches Patentamt
European Patent Office
Office européen des brevets

(11) Publication number: **0 143 293**
**B1**

(12) **EUROPEAN PATENT SPECIFICATION**

(45) Date of publication of patent specification: **09.03.88**

(51) Int. Cl.⁴: **B 24 B 19/26,** F 16 G 5/16

(21) Application number: **84112254.2**

(22) Date of filing: **12.10.84**

(54) **Process and apparatus for machining a transverse element for a driving belt and transverse element.**

(30) Priority: **11.11.83 NL 8303870**

(43) Date of publication of application:
**05.06.85 Bulletin 85/23**

(45) Publication of the grant of the patent:
**09.03.88 Bulletin 88/10**

(84) Designated Contracting States:
**AT CH DE FR GB IT LI NL SE**

(56) References cited:
**CH-A- 94 507**
**NL-A-7 801 101**

**IBM TECHNICAL DISCLOSURE BULLETIN, vol. 17, no. 12, May 1975, ARMONK, USA, J. E: PARKER et al.:" Grinding machine"**
**PATENT ABSTRACTS OF JAPAN, vol. 7, no. 141, (M.223) (1286) June 21, 1983 & JP-A-58 54 253 (NISSAN) (31-03-1983)**

(73) Proprietor: **Van Doorne's Transmissie B.V.**
**Dr. Hub van Doorneweg 120 Postbus 500**
**NL-5026 RA Tilburg (NL)**

(72) Inventor: **van Dijk, Johannes Abraham**
**Visserstraat 2**
**NL-5612 BT Eindhoven (NL)**

(74) Representative: **Timmermans, Anthonius C.Th., Ir. et al**
**European Patent Attorneys Octrooibureau Zuid**
**P.O. Box 2287**
**NL-5600 CG Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 143 293 B1

**Description**

The invention relates to a process for machining a substantially flat transverse element for a driving belt, provided with an edge intended to make contact with an endless carrier of the driving belt, having a curvature both in the running direction of the belt and in a direction perpendicular thereto.

The curvature in two perpendicular directions is advantageous in that it reduces wear due to the relative movement of the transverse element vis-à-vis the carrier which might result in belt rupture. In consequence of the double curvature additional stresses earlier encountered in the carrier due to the transverse element making a tilting movement as it enters between the sheaves of the V-shaped pully, whereby the sharp edge of the curved surface was pressed against the carrier, are obviated.

The invention also relates to an apparatus for conducting the process.

The Netherlands patent application 7801101 discloses a method for the machining of a substantially flat element of the above described kind whereby the curvature in both directions is produced in a single operation step by means of an abrasive belt; it has however been found that this method has the disadvantage that the curvatures of the edges of different elements may show differences with respect to each other which are unacceptable for satisfactory operation of the belts on which they will be mounted.

It is an object of the present invention to eliminate or in any case lessen this drawback.

A process according to the invention for producing a double curved surface on an edge of an essentially flat transverse element for use as a power transmitting element on an endless carrier to form a driving belt, which edge can in use come into contact with the endless carrier of the driving belt, whereby by a single grinding operation a surface is formed on said edge which is curved both in the running direction of the belt and in a direction at right angles thereto, is characterized by the fact that the grinding is carried out with the aid of an open-ended hollow cylinder having on its inner side an abrasive surface, the edge to be ground being brought into contact with said abrasive surface, and that the transverse element is inserted into the hollow cylinder in such manner that the flat surface of the element lies in a plane substantially parallel to the axis of the grinding cylinder and that the grinding cylinder and the element perform a rocking movement with respect to each other, in said plane.

In the I.B.M. Technical Disclosure Bulletin Vol. 17, no. 12, May 1975, a method and apparatus have been disclosed for grinding the edge of a flat workpiece using a hollow cylindrical grinding drum lined on the inside with abrasive material with which the edge to be ground is brought into contact. The grinding drum and the workpiece perform a relative rocking movement due to which a double curvature on the edge is realized.

Contrary to the invention however the flat workpiece is introduced into the open end of the hollow drum in such manner that the flat surface is substantially perpendicular to the axis of rotation of the drum. Thus the curvature of the "longer" side of the workpiece will after grinding be substantially equal to that of the inner side of the drum; according to the invention the "shorter" curvature is determined by the cylinder. For the flat transverse elements, to which the invention is limited, the "shorter" curvature is practically always the same and independent of the size of the elements. Therefore one size grinding hollow cylinder is sufficient to realize this "short" curvature. The "longer" curvature however is related to the size of the transverse element, Thus if the edges of different sizes are to be ground one would need different sizes (radii) of grinding cylinders when using the position of the workpiece described in the I.B.M. publication. When using a process according to the invention different sizes of transverse elements can be ground with the same cylinder.

A preferred embodiment of apparatus for conducting the process according to the invention is characterized in that it is provided with an open-ended cylindrical grinding device which is rotatable on a shaft and which is lined on the inside with an abrasive material, whilst it is also provided with a clamping device for gripping the transverse element such that the grinding device and the clamping device perform a movement vis-à-vis one another following a circular orbit whose axis crosses the axis of the grinding device at right angles.

If the clamping device performs a rocking movement around the pivot point, the "longer" curvature of the edge can be easily varied by displacing the pivot point of the clamping device.

According to a special embodiment of the invention the transverse element is arranged in such a position parallel to the axis of the grinding cylinder that the element does not include this axis. In that case the "short" curvature will be asymmetrical. This might be an advantage for some applications of driving belts. In most cases however a symmetrical "short" curvature will be desirable. Then the transverse element must include the axis of the grinding cylinder.

For a better understanding of the invention, embodiments of the process and apparatus according to the invention will now be described by way of example with reference to the accompanying drawings, in which

Fig. 1 is a diagrammatic cross-sectional view through a pulley over which a driving belt moves;

Fig. 2 diagrammatically shows two power-transmitting push elements;

Fig. 3 depicts an element which can be fitted on a carrier consisting of two bands or band packages;

Fig. 4 is a perspective view of a device according to the invention;

Fig. 5 is a diagrammatic plan view of the device according to Fig. 4;

Fig. 6 is a diagrammatic view of a device according to the invention for the machining of transverse elements intended for driving belts.

The transmission belt 3 represented in Fig. 1, which is provided with power-transmitting push elements (transverse elements) 6, can be used for transmitting a relatively large torque between two V-shaped pulleys, one of which is designated by the reference numeral 1. The spacing between the sheaves of the two V-shaped pulleys can be varied so as to attain a stepless variable transmission ratio. In such an arrangement the torque is transmitted by means of a power-transmitting force which is transferred through a number of push elements (transverse elements), on the understanding that the tension of the carrier 7 is at all times greater than the pushing force transmitted by the push elements 6 fitted on the carrier 7.

As appears from Fig. 1, the transverse element 6 is, upon its entry between the sheaves of the V-shaped pulley 1, forced slightly outwards in a radial direction, whilst the transverse elements 6 also go through a tilting movement vis-à-vis one another round the contact area 2. As a result, the edges 30 are pressed against the carrier 7, whereas contact with the curved surface 9 is lost to some degree. The tilting of the transverse elements vis-à-vis one another is made possible by the tapering face 5. In order to eliminate the adverse effects, the curved surface 9 is also ground slightly convex in the "short" direction (Fig. 6). This treatment has the additional benefit of affording a smooth ride of the curved surface 9 on the carrier 7. The driving belt 3 (Fig. 1) therefore consists of a plurality of transverse elements 6 slidably arranged on an endless carrier 7. The transverse elements 6 are slightly tapered inwardly in cross-section (face 5 in Fig. 2), making it easier for the driving belt 3 to pass with a curvature round the pulley 1 (Fig. 1). The number of transverse elements 6 arranged on the carrier 7 is such that they are in contact with one another and fill up the entire circumference. During operation of the driving belt 3 the tension in the carrier must be greater than the maximum pushing force that will be transmitted by the transverse elements 6 so as to prevent the straight portions of transmission belt 3 from sagging. The transverse elements 6 consist of a substantially non-deformable material and carrier 7 is formed, for example, by a package of metallic bands, i.e. a plurality of endless bands arranged one around another.

Fig. 2 presents a cross-sectional view of two transverse elements 6 which are positioned between the sheaves of the V-shaped pulleys 1. These elements 6 have a surface 9 shaped convexly in a direction perpendicular to the plane of drawing. The said elements 6 can tilt round a contact area 2. The space required for doing so is provided by the tapering face 5. The endless carrier 7 is accommodated in a recess 14.

Fig. 3 shows a front view of a transverse element 6 provided with two side faces 8 designed to cooperate with the sheaves of the V-shaped pulley, and a surface 9 over which the carrier 7 can be arranged. Both sides of the transverse element 6 have a recess 14 for accommodating the carrier 7. The two surfaces 9, intended for contacting the inside of a band package, are each of convex shape in the transverse direction.

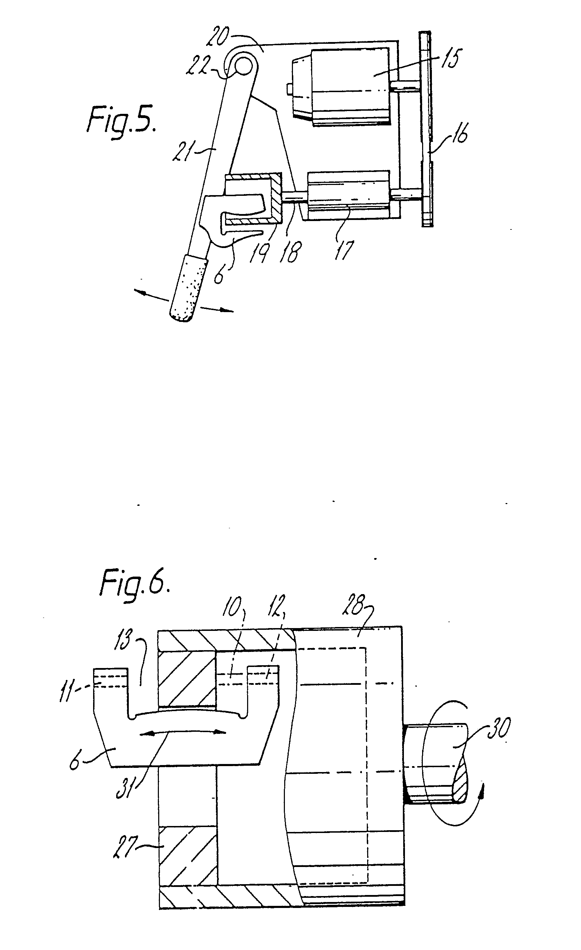

Fig. 4 represents an apparatus for conducting the process according to the invention. It comprises a motor 15 which, through a driving belt 16, drives an open-ended grinding wheel 19 whose shaft 18 is supported on the bearing block 17. The motor 15 and the bearing block 17 are disposed on a frame 20. A swing arm 21 which can pivot on a shaft 22 is connected to the transverse element 6 with the aid of clamping devices not shown in the drawing. By pivoting of the swing arm 21 on shaft 22, the surface 9 is given a convex shape according to the track thereby described, whilst at the same time a convex shape in a direction perpendicular to this track is impacted by the action of the cylindrical hollow grinding wheel 19. Fig. 5 is a diagrammatic plan view of the equipment according to Fig. 4.

Fig. 6 depicts a device for conducting the process according to the invention with which transverse elements of the type designated by the reference numeral 6 in Fig. 6 can be ground. The design employs a hollow cylindrical grinding wheel 27 retained in a chuck 28 which can rotate on a shaft 30. In the grinding process, a transverse element 6 is moved over a track schematically indicated by the arrow 31. Again, a convex surface is obtained that is curved in two mutually perpendicular directions. The reference number 10 denotes a locking pin which is passed through holes 11 and 12 after the carrier 7 has been positioned in space 13.

It has been found that the application of transverse elements which have been machined according to the process of the invention and arranged on a carrier consisting of a band or band package diminishes the load on the carrier. The convex shape of the surface which comes into contact with the endless carrier 7 prevents the edges of the surface from exerting undesirable forces on carrier 7 with the known transverse element; these forces manifested themselves especially upon entry of the transverse element 6 between the sheaves of the V-shaped pulley.

In the foregoing the invention has been described with reference to embodiments in which the rotating grinding device is disposed fixedly in the radial direction during the grinding operation, whereas the transverse element is moved relative to the grinding device.

Within the purview of the invention comes also the embodiment in which the transverse element is held stationary during the grinding operation and the grinding device performs the requisite movements. A particularly advantageous embodiment is one in which two setups according to Fig. 4 are applied, which are disposed opposite one another and can each rotate on their several, mutually parallel shafts (22), so that both surfaces 9 (Fig. 3) can be ground in one operation. During this treatment the transverse element 6 is held fixedly in position.

**Claims**

1. Process for producing a double curved surface on an edge of an essentially flat transverse element (6) for use as a power transmitting element on an endless carrier (7) to form a driving belt, which edge can in use come into contact with the endless carrier of the driving belt, whereby by a single grinding operation a surface is formed on said edge which is curved both in the running direction of the belt and in a direction at right angles thereto, characterized in that the grinding is carried out with the aid of an open-ended hollow cylinder (19) having on its inner side an abrasive surface, the edge to be ground being brought into contact with said abrasive surface, and that the transverse element is inserted into the hollow cylinder in such manner that the flat surface of the element lies in a plane substantially parallel to the axis of the grinding cylinder and that the grinding cylinder and the element perform a rocking movement with respect to each other, in said plane.

2. Process according to claim 1, characterized in tht the flat transverse element is inserted into the hollow cylinder in such manner that the axis of said cylinder lies in the flat part of the transverse element.

3. Apparatus for carrying out the process according to claim 1 or 2 characterized in that the open-ended hollow grinding cylinder has a fixed position and that the flat transverse element is carried by a clamping device conveying the rocking movement around an axis which is at a right angle to the axis of the hollow grinding cylinder.

4. Apparatus according to claim 3, characterized in that it is provided with two open-ended hollow grinding cylinders disposed symmetrically relative to the clamping device.

**Patentansprüche**

1. Arbeitsweise für die Herstellung einer doppelt gekrümmten Fläche an einer Seite eines im wesentlichen flachen Querelements (6) für die Verwendung als ein Leistung übertragendes Element an einem endlosen Träger (7) für die Bildung eines Treibriemens, welche Seite während des Gebrauchs mit dem endlosen Träger des Treibriemens in Berührung kommen kann, wobei durch eine einzige Schleifbearbeitung eine Oberfläche an der vorgenannten Seite gebildet wird, die sowohl in der Laufrichtung des Riemens wie in einer senkrecht dazu verlaufenden Richtung gekrümmt ist, ist dadurch gekennzeichnet, daß das Schleifen mittels eines hohlen Zylinders (19) mit offenem Ende ausgeführt wird, der an der Innenseite eine Schleifoberfläche hat, wobei die zu bearbeitende Seite mit der vorgenannten Schleifoberfläche in Berührung gebracht wird, und daß das Querelement auf derartige Weise in den hohlen Zylinder eingebracht wird, daß die flache Oberfläche des Elements in einer vorwiegend parallel zu der Achse des Schleifzylinders gelegenen Ebene liegt und daß der Schleifzylinder und das Element in der vorgenannten Ebene eine gegenseitig schaukelnde Bewegung ausüben.

2. Arbeitsweise nach Anspruch 1, dadurch gekennzeichnet, daß das flache Querelement auf derartige Weise in den hohlen Zylinder eingebracht wird, daß die Achse des vorgenannten Zylinders in dem flachen Teil des Querelements liegt.

3. Einrichtung zur Durchführung der Arbeitsweise nach Anspruch 1 oder 2, dadurch gekennzeichnet, daß der hohle Schleifzylinder mit offenem Ende eine feste Position einnimmt und daß das flache Querelement von einem Einspannorgan für die Führung der schaukelnden Bewegung um eine Achse getragen wird, welche Achse im geraden Winkel zu der Achse des hohlen Schleifzylinders steht.

4. Einrichtung nach Anspruch 3, dadurch gekennzeichnet, daß sie mit zwei hohlen Schleifzylindern mit offenem Ende versehen ist, die symmetrisch zum Einspannorgan aufgestellt sind.

**Revendications**

1. Procédé pour la production d'une surface à double courbure sur un côté d'un élément transversal (6) essentiellement plat à utiliser comme élément de transfert de puissance sur un porteur sans fin (7) pour former une courroie de transmission, lequel côté, lors de son utilisation, peut entrer en contact avec le porteur sans fin de la courroie de transmission, procédé dans lequel on forme sur ledit côté par une seule opération de meulage une surface qui est courbée aussi bien dans la direction de la course de la courroie que dans une direction perpendiculaire à celle-ci, avec la caractéristique que le meulage est exécuté au moyen d'un cylindre creux (19) ouvert à une extrémité et qui possède une surface abrasive à l'intérieur, le côté à façonner étant mis en contact avec ladite surface abrasive, et que l'élément transversal est introduit dans le cylindre creux d'une façon telle que la surface plate de l'élément se trouve dans un plan substantiellement parallèle à l'axe du cylindre abrasif et que le cylindre abrasif et l'élément exécutent dans ledit plan un mouvement oscillant l'un par rapport à l'autre.

2. Procédé selon la revendication 1, avec la caractéristique que l'élément transversal plat est introduit dans le cylindre creux d'une façon telle que l'axe dudit cylindre est situé dans la partie plate de l'élément transversal.

3. Installation pour l'exécution du procédé selon les revendications 1 et 2, avec la caractéristique que le cylindre de meulage creux ouvert à une extrémité conserve une position fixe, et que l'élément transversal plat est porté par un dispositif de fixation pour transmettre le mouvement d'oscillation autour d'un axe qui fait un angle droit avec l'axe du cylindre de meulage creux.

4. Dispositif selon la revendication 3, avec la caractéristique qu'il est équipé de deux cylindres de meulage creux, lesquel sont disposés symétriquement par rapport au dispositif de fixation.

Fig.1.

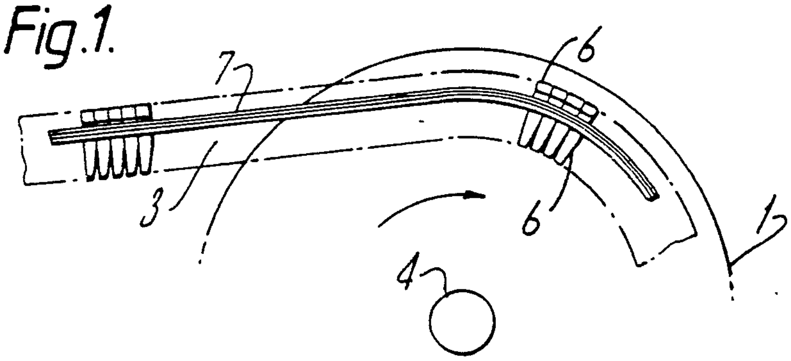


Fig.2.

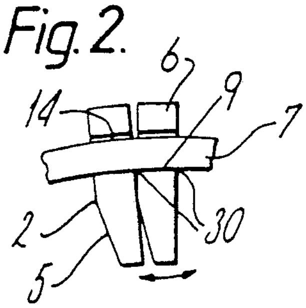


Fig.3.

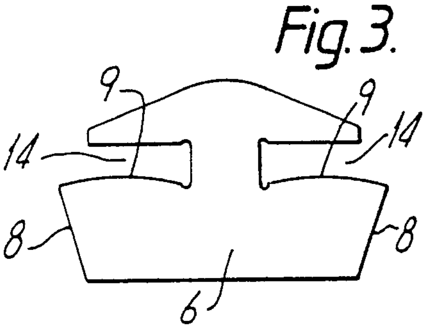


Fig.4.

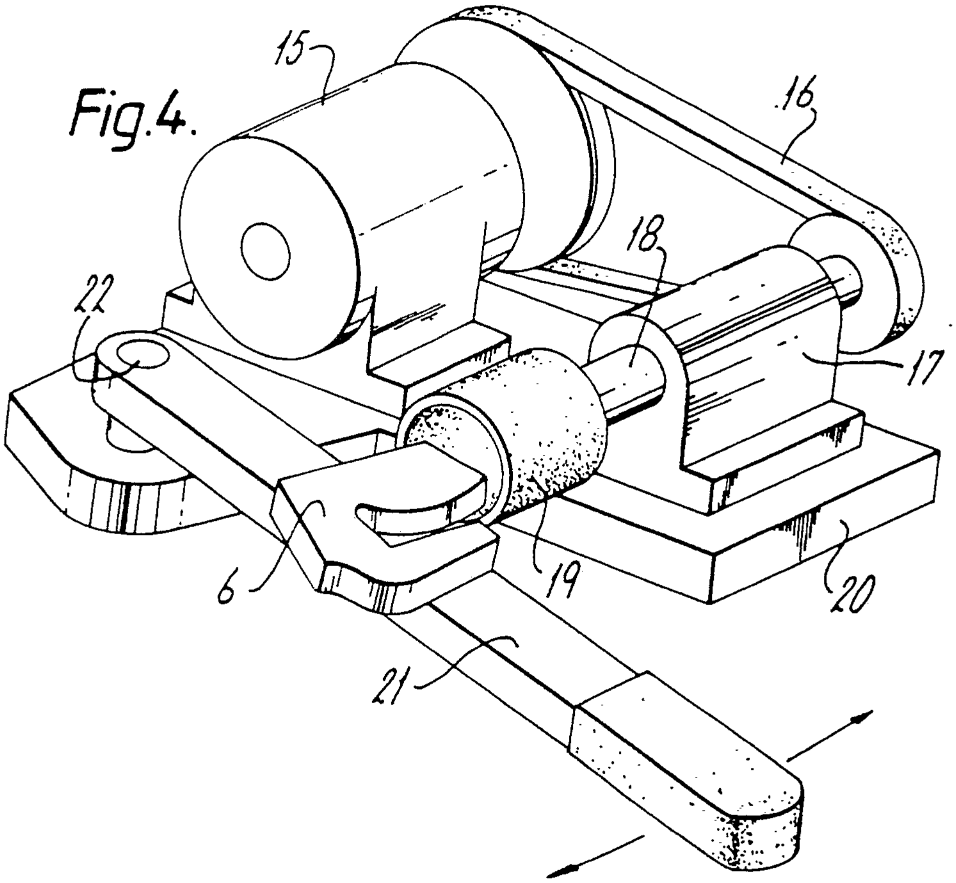

Fig.5.

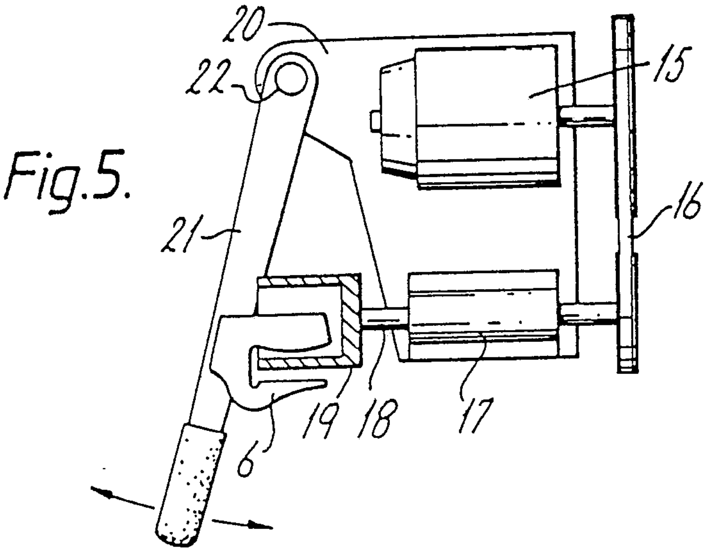


Fig.6.